# EUROPEAN PATENT APPLICATION

(11) **EP 2 199 341 A2**
(43) Date of publication of application: **23.06.2010**
(21) Application number: 09180167.0
(22) Date of filing: 21.12.2009
(51) Int. Cl.: C08L 69/00

(54) **Polylactic acid/polycarbonate resin composition and molded product using the same**

(30) Priority: 19.12.2008 KR 20080130526
(71) Applicant: Cheil Industries Inc., Kumi-city, Kyungsangbuk-do (KR)
(72) Inventor: Cho, Jin-Kyung, Gyeonggi-do (KR); Lee, Hyung-Tak, Gyeonggi-do (KR); Ha, Doo Han, Gyeonggi-do (KR); Jung, Chang-Do, Gyeonggi-do (KR)
(74) Representative: Bublak, Wolfgang

(57) **Abstract**

Disclosed is a polylactic acid/polycarbonate resin composition including (A) 100 parts by weight of a basic resin including: (a1) 10 to 90 wt% of a polycarbonate resin and (a2) 10 to 90 wt% of a polylactic acid resin; (B) 1 to 50 parts by weight of a flame retardant based on 100 parts by weight of the basic resin; (C) 1 to 30 parts by weight of an acryl-based copolymer; and (D) 1 to 20 parts by weight of an impact-reinforcing agent.

## Description

This disclosure relates to a polylactic acid/polycarbonate resin composition, a molded product using the same and a process of its preparation.

Much research on development of strong and safe polymer materials for special purposes has been undertaken. However, as discarded polymers have been socially recognized as a severe environmental problem all over the world, development of an environmentally-friendly polymer material as an alternative thereto is required.

Environmentally-friendly polymers may be mainly classified into photodegradable and biodegradable polymers. A biodegradable polymer includes a functional group that can be decomposed by microorganisms.

Among these polymers, an aliphatic polyester polymer has gained the most attention, since it has excellent working properties and easily adjustable decomposition characteristics. In particular, polylactic acid (PLA) has a world-wide market share of 150,000 tons and expansively covers the field where plastic is commonly used, for example, as a food packing material and a container, a case for electronics, and the like. The polylactic acid resin has been mainly used for a disposable product such as a food container, a wrap, a film, and the like by using biodegradable characteristic of the polylactic acid therein. This polylactic acid is produced by American Natureworks LLC, Japanese Toyota Motor Co., and the like at present.

However, the conventional polylactic acid resin lacks adequate molding property, mechanical strength, and heat resistance, and may be easily destroyed, when fabricated into a thin film. When fabricated into a molded product, it may also be transformed at 60°C or higher.

Japanese Patent Laid-Open Publication No. 2004-190026, 2006-335909, and 2006-182994 disclose a technology of mixing polylactic acid, a polycarbonate, and a flame retardant. However, the polycarbonate insufficiently complements weak mechanical and thermal properties of the polylactic acid, since they are simply fusion-mixed according to the aforementioned method.

On the other hand, Japanese Patent Laid-Open Publication No. 2006-111858 discloses a method of mixing a compatibilizer with a polylactic acid resin/polycarbonate resin to improve appearance of a molded product. However, the compatibilizer is only mentioned to improve compatibility and not mechanical strength and heat resistance.

In addition, Japanese Re-laid-Open Patent No. WO06/097979 introduced a polylactic acid/thermoplastic resin including a compatibilizer, but this resin is not flame retardant. In addition, it did not clarify how to prepare the compatibilizer.

One aspect of the present invention provides a polylactic acid/polycarbonate resin composition improving appearance of a molded product as well as having good heat resistance, impact strength, flame retardancy, and mechanical properties.

Another aspect of the present invention provides a molded product fabricated using the polylactic acid/polycarbonate resin composition.

According to one aspect of the present invention, provided is a polylactic acid/polycarbonate resin composition including: (A) 100 parts by weight of a basic resin including (a1) 10 to 90 wt% of a polycarbonate resin and (a2) 10 to 90 wt% of a polylactic acid resin; (B) 1 to 50 parts by weight of a flame retardant; (C) 1 to 30 parts by weight of an acryl-based copolymer; and (D) 1 to 20 parts by weight of an impact-reinforcing agent.

The polylactic acid resin preferably has a weight average molecular weight ranging from 80,000 to 300,000 g/mol.

The flame retardant is preferably selected from the group consisting of a phosphorus-based flame retardant, a nitrogen compound-based flame retardant, a silicon-based flame retardant, an inorganic flame retardant, and a combination thereof, and specifically, a phosphorus-based flame retardant.

The acryl-based copolymer preferably has a weight average molecular weight ranging from 500,000 to 10,000,000 g/mol, and specifically, from 1,000,000 to 10,000,000 g/mol. In addition, the acryl-based copolymer preferably is a copolymer of two or more monomers selected from the group consisting of a linear alkyl (meth)acrylate monomer, a branched alkyl (meth)acrylate monomer, a cyclic alkyl (meth)acrylate monomer, and a combination thereof; or a copolymer including a monomer selected from the group consisting of a linear alkyl (meth)acrylate monomer, a branched alkyl (meth)acrylate monomer, a cyclic alkyl (meth)acrylate monomer, and a combination thereof, and a reactive group grafted thereinto.

The impact-reinforcing agent preferably is selected from the group consisting of a copolymer having a core-shell copolymer, a linear olefin-based copolymer, and combinations thereof The copolymer having a core-shell structure can be prepared by grafting an unsaturated monomer selected from the group consisting of an acryl-based monomer, an aromatic vinyl monomer, an unsaturated nitrile monomer, and a combination thereof into a rubbery polymer polymerized with a monomer selected from the group consisting of a diene-based monomer, an acryl-based monomer, a silicon-based monomer, and a combination thereof.

According to another aspect of the present invention, provided is a product molded using the polylactic acid/polycarbonate resin composition.

Hereinafter, further aspects of the present invention will be described in detail.

Exemplary embodiments will hereinafter be described in detail.

As used herein, when specific definition is not provided, the term "(meth)acrylate" refers to an "acrylate" and a "methacrylate". In addition, "(meth)acrylic acid alkyl ester" can be both "acrylic acid alkyl ester" and "methacrylic acid alkyl ester," and "(meth)acrylic acid ester" can be both "acrylic acid ester" and "methacrylic acid ester."

The polylactic acid/polycarbonate resin composition according to one embodiment includes: (A) a basic resin including (al) a polycarbonate resin and (a2) a polylactic acid resin; (B) a flame retardant; (C) an acryl-based copolymer; and (D) an impact-reinforcing agent.

Exemplary components included in the polylactic acid/polycarbonate resin composition according to embodiments will hereinafter be described in detail.

### (A) Basic resin

According to one embodiment, the basic resin includes (al) a polycarbonate (PC) resin and (a2) a polylactic acid (PLA) resin.

### (a1) Polycarbonate resin

The polycarbonate resin according to one embodiment is preferably prepared by reacting diphenols of the following Formula 1 with a compound selected from the group consisting of a phosgene, a halogen acid ester, a carbonate ester, and a combination thereof.

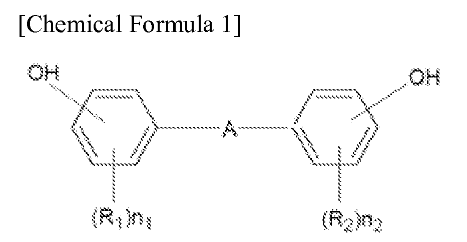

In the above Chemical Formula 1,

A is a linker selected from the group consisting of a single bond, a substituted or unsubstituted C1 to C30 linear or branched alkylene, a substituted or unsubstituted C2 to C5 alkenylene, a substituted or unsubstituted C2 to C5 alkylidene, a substituted or unsubstituted C1 to C30 linear or branched haloalkylene, a substituted or unsubstituted C5 to C6 cycloalkylene, a substituted or unsubstituted C5 to C6 cycloalkenylene, a substituted or unsubstituted C5 to C10 cycloalkylidene, a substituted or unsubstituted C6 to C30 arylene, a substituted or unsubstituted C1 to C20 linear or branched alkoxylene, a halogen acid ester, a carbonate ester, CO, S, and SO₂,
each of R₁ and R₂ is independently a substituent selected from the group consisting of a substituted or unsubstituted C1 to C30 alkyl and a substituted or unsubstituted C6 to C30 aryl, and
n₁ and n₂ are independent integers ranging from 0 to 4.

The term "substituted" refers to one substituted with one selected from the group consisting of a halogen, a C1 to C30 alkyl, a C1 to C30 haloalkyl, a C6 to C30 aryl, a C1 to C20 alkoxy, and combinations thereof instead of hydrogen.

The diphenols represented by the above Formula 1 are preferably used in combinations to constitute a repeating unit of the polycarbonate resin. The diphenols includes hydroquinone, resorcinol, 4,4'-dihydroxydiphenyl, 2,2-bis(4-hydroxyphenyl)propane (referred to as "bisphenol-A"), 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, and the like, in one embodiment, 2,2-bis(4-hydroxyphenyl)propane, 2,2-bis(3,5-dichloro-4-hydroxyphenyl)propane, or 1,1-bis(4-hydroxyphenyl)cyclohexane, and in another embodiment, 2,2-bis(4-hydroxyphenyl)propane.

The weight average molecular weight of the polycarbonate resin is not particularly limited. In a preferred embodiment, the polycarbonate resin has a weight average molecular weight ranging from 10,000 to 200,000 g/mol, more preferably 12,000 to 150,000 g/mol and most preferably 15,000 to 80,000 g/mol..

The polycarbonate resin may be a mixture of polycarbonate resins obtained using two or more diphenols that are different from each other. The polycarbonate resin may in particular be a linear polycarbonate resin, a branched polycarbonate resin, or a polyester carbonate copolymer..

The linear polycarbonate resin preferably includes a bisphenol-A-based polycarbonate resin. A branched polycarbonate resin may be produced by reacting a multi-functional aromatic compound such as trimellitic anhydride, trimellitic acid, and so on with diphenols and a carbonate. The multi-functional aromatic compound is preferably included in an amount of 0.05 to 2 mol% based on the total weight of the branched polycarbonate resin. The polyester carbonate copolymer resin is preferably produced by reacting a difunctional carboxylic acid with diphenols and a carbonate. The carbonate preferably includes a diaryl carbonate such as diphenyl carbonate, or ethylene carbonate.

The polycarbonate resin is included in an amount of 10 to 90 wt%, preferably in an amount of 15 to 70 wt%, more preferably 20 to 80 wt%, and most preferably 50 to 80, based on the total weight of the basic resin of the polycarbonate resin and the polylactic acid resin. When the polycarbonate resin is included within the range, it can contribute to improvement of heat resistance and impact strength, as well as environmentally-friendly effects.

### (a2) Polylactic acid resin

In general, the polylactic acid is a polyester-based resin prepared by ester-reacting lactic acid acquired through decomposition of cornstarch as a monomer, and can be commercially available.

The polylactic acid resin preferably includes a repeating unit induced from lactic acid selected from the group consisting of L-lactic acid, D-lactic acid, L,D-lactic acid, and a combination thereof.

The polylactic acid resin preferably includes more than 95 wt% of a repeating unit induced from L-lactic acid in terms of balance between heat resistance and molding property. In particular, it preferably includes 95 to 100 wt% of a repeating unit induced from L-lactic acid and 0 to 5 wt% of a repeating unit induced from D-lactic acid. Most preferably, it includes 98 to 99.99 wt% of a repeating unit induced from L-lactic acid and 0.01 to 2 wt% of a repeating unit induced from D-lactic acid. When it has the aforementioned composition, it can have balance between heat resistance and molding property, and excellent hydrolytic resistance.

In addition, when the polylactic acid resin can be molded, it has no particular limit in the molecular weight or the molecular weight distribution. However, it preferably has a weight average molecular weight of 80,000 g/mol or more and more preferably from 80,000 to 300,000 g/mol.

When it has a weight average molecular weight within the range, it may contribute to balance of mechanical strength and heat resistance of the molded product.

The polylactic acid resin is preferably selected from the group consisting of a polylactic acid homopolymer, a polylactic acid copolymer, and a combination thereof.

The polylactic acid homopolymer is a polymer prepared by open ring-polymerizing lactic acid selected from L-lactic acid, D-lactic acid, or a combination thereof.

The polylactic acid copolymer is a random or block copolymer with a component capable of being copolymerized with the polylactic acid polymer. The component capable of being copolymerized with the polylactic acid polymer preferably includes a compound having a functional group that can have two or more ester-combinations inside a molecule.

The compound having a functional group that can have two or more ester-combinations inside a molecule preferably includes (i) dicarboxylic acid, (ii) polyhydric alcohols, (iii) a hydroxy carbonic acid other than lactic acid, (iv) a lactone, or (v) various polyesters, polyethers, polycarbonates, prepared from the compound.

The (i) dicarboxylic acid preferably includes a C4 to C50 linear or branched saturated or unsaturated aliphatic dicarboxylic acid, a C8 to C20 aromatic dicarboxylic acid, or polyether dicarboxylic acid.

Herein, the aliphatic dicarboxylic acid preferably includes succinic acid, adipic acid, sebacic acid, or decanedicarboxylic acid. The aromatic dicarboxylic acid preferably includes phthalic acid, terephthalic acid, or isophthalic acid. The polyether dicarboxylic acid preferably includes dicarboxylic acid having a carboxyl methyl group at both ends of polyalkylene ether such as polyethylene glycol, polypropylene glycol, polybutylene glycol, or polyethylene polypropylene glycol.

The (ii) polyhydric alcohols preferably include aliphatic polyols, aromatic polyhydric alcohols, or polyalkylene ethers.

Herein, the aliphatic polyols are preferably C2 to C50 aliphatic polyols having 2 to 4 hydroxy groups such as butane diol, hexane diol, octane diol, decane diol, 1,4-cyclohexanedimethanol, glycerine, sorbitan, or trimethylolpropane, neopentyl glycol.

In addition, the aromatic polyhydric alcohols preferably include C6 to C20 aromatic diols such as bis-hydroxy methyl benzene, hydroquinone, and the like, or aromatic diols prepared by adding C2 to C4 alkylene oxides such as ethylene oxide, propylene oxide, butylene oxide to bisphenols such as bisphenol A, or bisphenol F , and then reacting them together.

In addition, the polyalkylene ethers preferably include ether glycols such as diethylene glycol, triethylene glycol, polyethylene glycol, or polypropylene glycol.

The (iii) hydroxy carbonic acid other than lactic acid preferably includes a C3 to C10 hydroxy carbonic acid such as glycol acid, hydroxy butyl carbonic acid, or 6-hydroxy caproic acid.

The (iv) lactone preferably includes glycolide, ε-caprolactone glycolide, ε-caprolactone, β-propinolactone, δ-butyrolactone, β-butyrolactone, γ-butyrolactone, or δ-valerolactone.

The (v) various polyesters, polyethers, and polycarbonates is optionally be included to prepare a lactic acid copolymer without limit if conventionally used for that, but in particular, included is polyester among them.

The polyester preferably includes an aliphatic polyester prepared from an aliphatic dicarboxylic acid and an aliphatic diol.

Herein, the aliphatic dicarboxylic acid preferably includes succinic acid, adipic acid, sebacic acid, or decanedicarboxylic acid. The aliphatic diol preferably includes a C2 to C20 aliphatic diol such as ethylene glycol, propane diol, butane diol, hexane diol, or octane diol, a polyalkylene ether (a single polymer or a copolymer) such as polyethylene glycol, polypropylene glycol, or polybutylene glycol, or polyalkylene carbonate.

The polylactic acid resin is preferably included in an amount of 10 to 90 wt%, more preferably in an amount of 20 to 80 wt% based on the entire amount of the basic resin of a polycarbonate resin and a polylactic acid resin. When the polylactic acid resin is included within the range, it can bring about excellent heat resistance and impact strength, and environmentally-friendly effects.

### (B) Flame retardant

According to one embodiment, the flame retardant has no particular limit, but is preferably selected from the group consisting of a phosphorus-based flame retardant, a nitrogen compound-based flame retardant, a silicon-based flame retardant, an inorganic flame retardant, and a combination thereof, and in particular, a phosphorus-based flame retardant.

The phosphorus-based flame retardant preferably includes an organic phosphorus-based compound such as a phosphoric acid ester, a poly phosphoric acid salt, and the like, or red phosphorus.

Examples of the phosphorus-based flame retardant include trimethyl phosphoric acid salt, triethyl phosphoric acid salt, tributyl phosphoric acid salt, trihexyl phosphoric acid salt, tributoxyethyl phosphoric acid, triphenyl phosphoric acid salt, tricresyl phosphoric acid salt, trixylenol phosphoric acid salt, triisopropylphenyl phosphoric acid salt, triphenyl phosphoric acid salt, trinaphthyl phosphoric acid salt, cresyl diphenyl phosphoric acid salt, xylenoldiphenyl phosphoric acid salt, diphenyl phosphoric acid salt, methacryloyl oxyethyl phosphoric acid salt, diphenylacryloyloxyethyl phosphoric acid salt, diphenyl methacryloyloxyethyl phosphoric acid salt, melamine phosphoric acid salt, dimelamine phosphoric acid salt, melaminepyro phosphoric acid salt, triphenylphosphine oxide, tricresyl phosphineoxide, methanephosphoric acid diphenyl, phenylphosphoric acid hydroxyl phosphoric acid salt, and a condensed phosphoric acid ester of condensed materials thereof.

Commercially-available examples of the condensed phosphoric acid ester include PX-200, PX-201, PX-202, CR-733S, CR-741, CR-747, made by DAIHACHI CHEMICAL INDUSTRY CO., LTD.

The nitrogen compound-based flame retardant preferably includes an aliphatic amine compound, an aromatic amine compound, a heterocyclic nitrogen compound, a cyan compound, an aliphatic amide, an aromatic amide, a urea, or a thio urea.

The aliphatic amine compound preferably includes ethyl amine, butyl amine, diethyl amine, ethylene diamine, triethylene tetramine, diamino cyclohexane, diamino cyclooctane, guanine, diamino purine, tripyridine, or a triazine compound.

The silicon-based flame retardant preferably includes a silicone resin or silicone oil.

The silicone resin preferably includes a resin having a three dimensional net structure that is capable of forming a unit such as RSiO_{3/2}, RSiO, and RSiO_{1/2}. Herein, R indicates a C1 to C10 alkyl group such as a methyl group, an ethyl group, a propyl group, an aromatic group, or the above substituents further including a vinyl group.

The silicone oil preferably includes a modified polysiloxane including at least one methyl group at the side chain or the end of poly dimethyl siloxane, and a poly dimethyl siloxane modified by one selected from the group consisting of hydrogen, an alkyl group, a cyclohexyl group, a phenyl group, a benzyl group, an epoxy group, a polyether group, a carboxyl group, a mercapto group, a chloro alkyl group, an alkyl alcohol ester group, an alcohol group, an allyl group, a vinyl group, a trifluoro methyl group, and a combination thereof, or a mixture thereof.

The inorganic flame retardant preferably includes silicon oxide (SiO₂), magnesium hydroxide, aluminum hydroxide, antimony trioxide, antimony pentaoxide, antimony, sodium carbonate, hydroxy zinc tartrate, zinc tartrate, meta tartaric acid, zinc sulfate, zinc oxide, ferrous oxide, ferric oxide, tin oxide (SnO), tin dioxide (SnO₂), zinc borate, calcium borate, ammonium borate, ammonium octamolybdate, a metal salt of tungstenate, a composite oxide of tungsten and a metalloid, a zirconium-based compound, a guanidine-based compound, graphite, talc, expanded graphite, and the like. In particular, aluminum hydroxide and talc are most preferably used.

The flame retardant is included in an amount of 1 to 50 parts by weight by weight based on 100 parts by weight of the basic resin of a polycarbonate resin and a polylactic acid resin. Preferably, it is included in an amount of 5 to 30 parts. When it is included within the range, it can accomplish excellent impact resistance and heat resistance as well as excellent flame retardancy.

### (C) Acryl-based copolymer

According to one embodiment, an acryl-based copolymer is used as a compatibilizer.

The acryl-based copolymer is preferably a copolymer including at least two monomers selected from the group consisting of a linear alkyl (meth)acrylate monomer, a branched alkyl (meth)acrylate monomer, a cyclic alkyl (meth)acrylate monomer, and a combination thereof Herein, the alkyl indicates a C1 to C18 alkyl.

The linear alkyl (meth)acrylate preferably includes methyl acrylate, ethyl acrylate, n-butyl acrylate, lauryl acrylate, stearyl acrylate, methyl methacrylate, ethyl methacrylate, n-butyl methacrylate, lauryl methacrylate, stearyl methacrylate, tridecyl methacrylate, i-butyl methacrylate, or t-butyl methacrylate.

The branched alkyl (meth)acrylate preferably includes 2-ethylhexyl acrylate, or 2-ethylhexyl methacrylate.

The cyclic alkyl (meth)acrylate preferably includes cyclohexyl acrylate, or cyclohexyl methacrylate.

Specific preferred examples of the acryl-based copolymer include a copolymer including at least one monomer selected from the group consisting of any other linear, branched, and cyclic alkyl (meth)acrylates, and a combination thereof, except for a methylmethacrylate monomer and a methylmethacrylate monomer. The copolymer includes 60 to 95 wt% of a methylmethacrylate monomer and 5 to 40 wt% of the rest of the monomers. It preferably includes 75 to 85 wt% of a methylmethacrylate monomer and 15 to 25 wt% of the rest of the monomers. When the acryl-based copolymer has the aforementioned composition, it can bring about excellent appearance of a molded product.

The acryl-based copolymer preferably has a weight average molecular weight ranging from 500,000 to 10,000,000 g/mol, more preferably from 1,000,000 to 10,000,000 g/mol, even more preferably, from 1,000,000 to 5,000,000 g/mol, and most preferably, from 1,500,000 to 4,000,000 g/mol. When it has a weight average molecular weight within the range, the molded product can have excellent impact strength and appearance.

The acryl-based copolymer is preferably prepared in a method of emulsion polymerization, suspension polymerization, or solution polymerization. Most preferably, the method includes emulsion polymerization. The emulsion polymerization is preferably performed by using a common emulsifier, a polymerization initiator, and/or a redox catalyst.

In this embodiment, the acryl-based copolymer is preferably prepared by using 0.5 to 5 parts by weight of the emulsifier, 0.0005 to 0.005 parts by weight of the polymerization initiator, and 0.01 to 0.1 parts by weight of the redox catalyst based on 100 parts by weight of a monomer therein.

The emulsifier has no particular limit, but preferably includes an anionic emulsifier such as aliphatic ester, alkyl benzene sulfonate, alkyl phosphate salt, or dialkyl sulfosuccinate, or a non-ionic emulsifier such as polyoxyethylene alkyl ether, or alkylamine ester, singularly or in combination.

The polymerization initiator preferably includes a water-soluble initiator such as potassium persulfate, ammonium persulfate, or sodium persulfate; a fat-soluble initiator including an organic peroxide such as t-butyl hydroperoxide, cumene hydroperoxide, benzoyl peroxide, or lauryl peroxide; and/or a redox initiator.

The redox catalyst preferably includes sodium formaldehyde sulfoxylate, disodium ethylene diamine tetraacetate, ferrous sulfate, or copper sulfate (CuSO₄).

The acryl-based copolymer preferably includes a copolymer polymerized by grafting a reactive group like an epoxy group into a monomer selected from the group consisting of a linear alkyl (meth)acrylate monomer, a branched alkyl (meth)acrylate monomer, a cyclic alkyl (meth)acrylate monomer, and a combination thereof Herein, the reactive group is preferably included in an amount of 1 to 40 wt% based on the entire amount of the acryl-based copolymer. When it is included within the range, it can improve mechanical strength such as impact strength, hardness, and the like.

According to one embodiment, an acryl-based copolymer having no reactive group is preferably more appropriately used for the field requiring excellent appearances.

The acryl-based copolymer is preferably included in an amount of 1 to 30 parts by weight based on 100 parts by weight of the basic resin of a polycarbonate resin and a polylactic acid resin. In another preferred embodiment, it is be included in an amount of 1 to 15 parts by weight. When it is included within the range, it can secure excellent flame retardancy.

### (D) Impact-reinforcing agent

The impact-reinforcing agent has excellent affinity to the polylactic acid resin, and preferably includes one selected from the group consisting of a core-shell copolymer, a linear olefin-based copolymer, and combinations thereof.

The core-shell copolymer has a core-shell structure. When an unsaturated monomer is grafted into the core of rubber, a shell is formed to be hard. The unsaturated monomer is preferably selected from the group consisting of an acryl-based monomer, an aromatic vinyl monomer, an unsaturated nitrile monomer, and a combination thereof, and is grafted into a rubbery polymer polymerized with a monomer selected from the group consisting of a diene-based monomer, an acryl-based monomer, a silicon-based monomer, and a combination thereof.

The diene-based monomer preferably includes butadiene, or isoprene Most preferred is butadiene.

The acryl-based monomer preferably includes methylacrylate, ethylacrylate, n-propylacrylate, n-butylacrylate, 2-ethylhexylacrylate, hexylmethacrylate, or 2-ethylhexylmetaacrylate. Curing agents such as ethyleneglycoldimethacrylate, propyleneglycoldimethacrylate, 1,3-butyleneglycoldimethacrylate, 1,4-butyleneglycoldimethacrylate, allylmethacrylate, triallylcyanurate are preferably used.

The silicon-based monomer can be prepared from cyclosiloxane. Examples are preferably selected from the group consisting of hexamethylcyclotrisiloxane, octamethylcyclotetrasiloxane, decamethylcyclopentasiloxane, dodecamethyl-cyclohexasiloxane, trimethyltriphenylcyclotrisiloxane, tetramethyltetraphenylcy-clotetrasiloxane, and octaphenylcyclotetrasiloxane. Herein, it preferably includes a curing agent such as trimethoxymethylsilane, triethoxyphenylsilane, tetramethoxysilane, or tetraethoxysilane.

When the rubbery polymer has a rubber average particle diameter ranging from 0.4 to 1 µm, it can secure good balance between impact resistance and coloring property.

Among the unsaturated monomers, the acryl-based monomer is preferably selected from the group consisting of a (meth)acrylic acid alkyl ester, a (meth)acrylic acid ester, and a combination thereof. Most preferably, it is selected from the group consisting of a (meth)acrylic acid alkyl ester having no reactive group, a (meth)acrylic acid ester, and a combination thereof. An impact-reinforcing agent including the acryl-based monomer having no reactive group grafted into the rubbery polymer can bring about excellent appearance.

Herein, the alkyl indicates a C1 to C10 alkyl. Preferred examples of the (meth)acrylic acid alkyl ester include methyl(meth)acrylate, ethyl(meth)acrylate, propyl(meth)acrylate, and butyl(meth)acrylate. Methyl(meth)acrylate is most preferred.

In addition, the anhydride preferably includes an acid anhydride. Preferably, it includes carboxylic acid anhydride such as anhydrous maleic acid, or anhydrous itaconic acid.

Among the unsaturated monomers, the aromatic vinyl monomer is preferably selected from the group consisting of styrene, a C1-C10 alkyl substituted styrene, a halogen-substituted styrene, and a combination thereof. Preferred examples of the alkyl substituted styrene include o-ethyl styrene, m-ethyl styrene, p-ethyl styrene, and alphamethyl styrene.

Among the unsaturated monomers, the unsaturated nitrile monomer is preferably selected from the group consisting of acrylonitrile, methacrylonitrile, ethacrylonitrile, and a combination thereof.

The core-shell copolymer preferably includes 50 to 90 wt% of the rubbery polymer and 10 to 50 wt% of the unsaturated monomer. When the core-shell copolymer has the aforementioned composition, it can bring about excellent compatibility with a resin, and as a result, remarkably reinforces impact strength.

The linear olefin-based copolymer preferably includes a copolymer of an olefin-based monomer and an acryl-based monomer.

The olefin-based monomer preferably includes ethylene, propylene, isopropylene, butylene, isobutylene, in singularly or in combination.

The acryl-based monomer preferably includes a (meth)acrylic acid alkyl ester or a (meth)acrylic acid ester. Herein, the alkyl indicates a C1 to C10 alkyl. Preferred examples of the (meth)acrylic acid alkyl ester include methyl(meth)acrylate, ethyl(meth)acrylate, propyl(meth)acrylate, butyl(meth)acrylate. Most preferred is methyl(meth)acrylate. Preferred examples of the (meth)acrylic acid ester include (meth)acrylate.

The linear olefin-based copolymer is preferably prepared by using a Ziegler-Natta catalyst, which is a common olefin polymerization catalyst. It is preferably prepared by using a metallocene-based catalyst in order to make a more selective structure.

Herein, a reactive group such as anhydrous maleic acid is preferably grafted into an olefin-based copolymer in order to improve dispersion with a polylactic acid resin. The method of grafting a reactive group into a linear olefin-based copolymer can be easily performed by those who have common knowledge in the related field of the present invention.

According to one preferred embodiment, an impact-reinforcing agent, in particular, the linear olefin-based copolymer having no reactive group, can be more appropriately used in a field requiring excellent appearance.

According to one preferred embodiment, the impact-reinforcing agent is included in an amount of 1 to 20 parts by weight based on 100 parts by weight of the basic resin of a polycarbonate resin and a polylactic acid resin. In an even more preferred embodiment, it is included in an amount of 3 to 10 parts by weight. When it is included within the range, it can maximize impact reinforcement and heat resistance and improve fluidity, and thereby improve the injection molding property.

### (E) Other additive

According to a preferred embodiment, a polylactic acid/polycarbonate resin composition can further include one or more additives.

The additive is preferably selected from the group consisting of an antibacterial agent, a heat stabilizer, an antioxidant, a releasing agent, a light stabilizer, a compatibilizer, an inorganic material additive, a surfactant, a coupling agent, a plasticizer, an admixture, a stabilizer, a lubricant, an antistatic agent, a flame-proofing agent, a weather-resistance agent, a colorant, an ultraviolet (UV) blocking agent, a filler, a nucleating agent, an adhesion aid, an adhesive, and mixtures thereof.

The antioxidant preferably includes a phenol-type, a phosphite-type, a thioether-type, or an amine-type antioxidant. The release agent preferably includes a fluorine-including polymer, silicone oil, a metal salt of stearic acid, a metal salt of montanic acid, montanic acid ester wax, or polyethylene wax. In addition, the weather-resistance agent preferably is a benzophenone-type or an amine-type. The colorant preferably includes a dye or a pigment. The ultraviolet (UV) blocking agent preferably includes titanium dioxide (TiO₂) or carbon black. The filler preferably includes glass fiber, carbon fiber, silica, mica, alumina, clay, calcium carbonate, sulfuric acid calcium, or glass beads. When the filler is included, it can improve mechanical strength, heat resistance, and the like. In addition, the nucleating agent preferably includes clay.

The additive is preferably included in an amount of 0.1 to 30 parts by weight based on 100 parts by weight of the basic resin of a polycarbonate resin and a polylactic acid resin. When it is included within the range, each additive can bring about respectively desired effects, and also provide excellent mechanical properties and improve surface appearance.

According to a preferred embodiment, a polylactic acid/polycarbonate resin composition is prepared by blending a polycarbonate resin, a polylactic acid resin, a flame retardant, an acryl-based copolymer, and an impact-reinforcing agent. In other words, it is preferably prepared by simultaneously mixing a polycarbonate resin, a polylactic acid resin, a flame retardant, an acryl-based copolymer, and an impact-reinforcing agent, or by mixing a polylactic acid resin and the impact-reinforcing agent and then master-disposing the mixture.

The master-disposing method decreases a viscosity difference between a polycarbonate resin and a polylactic acid resin, since the polylactic acid resin with comparatively lower viscosity than the polycarbonate resin may have deteriorated fluidity due to an impact-reinforcing agent.

In addition, according to a preferred embodiment, pellets can be prepared by using a polylactic acid/polycarbonate resin composition in a well-known method. For example, the pellets can be prepared by mixing each component of the present invention and additives and then melt-extruding the mixture in an extruder.

According to a preferred embodiment, provided is a product molded by using the polylactic acid/polycarbonate resin composition of the present invention. The polylactic acid/polycarbonate resin composition can be usefully applied to a molded product requiring heat resistance, impact strength, flame retardancy, and good mechanical properties and appearance, for example, an auto, auto parts, electronic parts, communication devices, office machines, and the like. In particular, it can be applied to a housing for electronics such as a television, a computer, a printer, a washing machine, a cassette player, audio equipment, games, and the like.

The following examples illustrate the present invention in detail.

### [Examples]

According to one embodiment, a polylactic acid/polycarbonate resin composition includes each component as follows.
(A) Basic resin
(A-1) Polycarbonate resin
   CALIBRE 200-3 made by Korean LG-DOW was used.
(A-2) Polylactic acid resin
   4032D made by American NatureWorks LLC was used.
(B) Flame retardant
   PX-200 made by Japanese DAIHACHI as a phosphorus-based flame retardant was used.
(C) Acryl-based copolymer
(C-1) 190.15g of ion-exchanged water, 0.015g of didodecylsulfosuccinic acid sodium, 0.001g of n-dodecyl mercaptan, 0.2g of sodium bicarbonate (Na-HCO₃), 7g of butyl methacrylate, and 4g of butyl acrylate were prepared into an emulsion in a 3ℓ four-necked flask reactor with an agitator, a thermometer, a nitrogen hole, and a circulative condenser. The emulsion was maintained at 75°C in the reactor and substituted into a nitrogen atmosphere, and then, 0.05g of potassium persulfate was added thereto. The resulting mixture was reacted for 120 minutes, preparing a seed latex. When the seed reaction was complete, a mixture including 63g of butyl methacrylate, 4 1 g of butyl acrylate, 50g of methyl methacrylate, 0.1g of didodecylsulfosuccinic acid sodium, and 0.063g ofn-dodecyl mercaptan, as well as 20g of potassium persulfate (0.5%-diluted solution), were simultaneously put into a reactor for 320 minutes, while maintaining the interior temperature at 75°C. The resulting mixture was polymerized through a further reaction for 60 minutes. The prepared copolymer was butyl acrylate/butyl methacrylate/methyl methacrylate having a weight average molecular weight of 1,500,000 g/mol.
(C-2) A copolymer was prepared according to the same method as in C-1 except for using 10g of potassium persulfate as a polymerization initiator. The prepared copolymer was butyl acrylate/butyl methacrylate/methyl methacrylate having a weight average molecular weight of 4,100,000 g/mol.
(C-3) A copolymer was prepared according to the same method as in C-1 except for using 5g of potassium persulfate as a polymerization initiator. The prepared copolymer was butyl acrylate/butyl methacrylate/methyl methacrylate having a weight average molecular weight of 8,000,000 g/mol.
(C-4) A copolymer was prepared according to the same method as in C-2 except for using no butyl methacrylate as a monomer. The prepared copolymer was butyl acrylate/methyl methacrylate having a weight average molecular weight of 3,900,000 g/mol.
(C-5) A copolymer was prepared according to the same method as in C-2 except for using ethyl methacrylate instead of butyl methacrylate as a monomer. The prepared copolymer was butyl acrylate/ethyl methacrylate/methyl methacrylate having a weight average molecular weight of 4,000,000 g/mol.
(C-6) Modiper A-4200 made by Nippon Oil and Fats Co., Ltd. was used as an acryl-based copolymer prepared by grafting glycidyl methacrylate into an acryl-based monomer in an amount of 10 wt%.
(D) Impact-reinforcing agent
   METABLENE C-223A made by Mitsubishi Rayon Co. was used.

### Examples 1 to 7 and Comparative Examples 1 to 3

The aforementioned components were put in a reaction extruder in an amount shown in the following Table 1 at a feed rate of 40kg/hr, a screw rpm of 240, a temperature of 250 to 300°C, a screw configuration of 45ϕ regular, L/D=36, and then reacted together.

Next, the reactant was extruded at a temperature ranging from 220 to 280°C in a common twin-screw extruder and prepared into pellets.

### Experimental Example

After the pellets according to Examples 1 to 7 and Comparative Examples 1 to 3 were dried at 80°C for 4 hours, an ASTM dumbbell specimen was injection-molded by using a 6 oz injection molding machine and setting its cylinder temperature at 220 to 280°C, the mold temperature at 100°C, and the molding cycle at every 40 seconds. The specimen was measured regarding properties. The results are provided in the following Table 1.
(1) Thermal distortion temperature (VST): measured referring to ASTM D1525.
(2) Izod impact strength: measured referring to ASTM D256A.
(3) Flame retardancy: measured referring to UL-94 V test.
(4) Appearance: examined with naked eye regarding appearance of a molded product.
(5) Tensile strength: measured referring to ASTM D638.
(6) Flexural strength: measured referring to ASTM D790.
(7) Flexural modulus: measured referring to ASTM D790.

**Table 1**

| | | unit | Examples | | | | | | | Comparative Examples | |
|---|---|---|---|---|---|---|---|---|---|---|---|
| | | | 1 | 2 | 3 | 4 | 5 | 6 | 7 | 1 | 2 |
| (A) basic resin | (al) polycarbonate resin | wt% | 70 | 70 | 70 | 70 | 70 | 70 | 70 | 70 | 70 |
| | (a2) polylactic acid resin | wt% | 30 | 30 | 30 | 30 | 30 | 30 | 30 | 30 | 30 |
| (B) flame retardant | | parts by weight* | 15 | 15 | 15 | 15 | 15 | 15 | 15 | 15 | 15 |
| (C) acryl-based copolymer | (C-1) | parts by weight* | 5 | - | - | - | - | - | - | - | - |
| | (C-2) | parts by weight* | - | 5 | - | - | - | 15 | - | - | 35 |
| | (C-3) | parts by weight* | - | - | 5 | - | - | - | - | - | - |
| | (C-4) | parts by weight* | - | - | - | 5 | - | - | - | - | - |
| | (C-5) | parts by weight* | - | - | - | - | 5 | - | - | - | - |
| | (C-6) | parts by weight* | - | - | - | - | - | - | 5 | - | - |
| (D) impact-reinforcing agent | | parts by weight* | 5 | 5 | 5 | 5 | 5 | 5 | 5 | 5 | 5 |
| thermal distortion temperature (VST, 5 kg) | | °C | 87 | 88 | 90 | 87 | 86 | 90 | 83 | 84 | 91 |
| 1/8" Izod Impact strength | | kgf·cm/cm | 12 | 14 | 15 | 12 | 12 | 15 | 12 | 10 | 10 |
| flame retardancy** UL-94 | | - | V0 | V0 | V1 | V0 | V0 | V1 | V0 | V0 | fail |
| appearance*** | | - | ○ | □ | ○ | ○ | ○ | □ | □ | × | □ |
| tensile strength | | kgf/cm² | 720 | 740 | 740 | 750 | 750 | 730 | 650 | 700 | 650 |
| flexural strength | | kgf/cm² | 1000 | 1030 | 1000 | 990 | 1010 | 990 | 940 | 980 | 920 |
| flexural modulus | | kgf/cm² | 29000 | 30000 | 30000 | 29000 | 29000 | 29800 | 29000 | 29000 | 27000 |

| | | | | | | | | | | | |
|---|---|---|---|---|---|---|---|---|---|---|---|
| * parts by weight: indicated based on 100 parts by weight of the basic resin (A). ∗∗ grade of flame retardancy: V0 > V1 > fail *** grade of appearance: ⊚ (excellent) > ○ (good) > △ (normal) > × (bad) | | | | | | | | | | | |

Referring to Table 1, the pellets of Examples 1 to 7 including a polycarbonate resin, a polylactic acid resin, a flame retardant, an acryl-based copolymer with various molecular weights, and an impact-reinforcing agent according to one embodiment turned out to have excellent heat resistance, impact strength, flame retardancy, and mechanical strength. In particular, the pellet of Examples 1 to 6 including an acryl-based copolymer having no reactive group had better appearance than the one of Example 7 including an acryl-based copolymer having a reactive group.

On the other hand, the one of Comparative Example 1 including no acryl-based copolymer had much deteriorated heat resistance and impact strength, and had a bad appearance. In addition, the one of Comparative Example 2 including an acryl-based copolymer out of the range according to the embodiment had deteriorated impact strength, flame retardancy, and mechanical strength.

This application claims priority to and the benefit of Korean Patent Application No. 10-2008-0130526 filed on December 19, 2008, the entire content of which is incorporated herein by reference.

## Claims

1. A polylactic acid/polycarbonate resin composition comprising:
(A) 100 parts by weight of a basic resin comprising (a1) 10 to 90 wt% of a polycarbonate resin and (a2) 10 to 90 wt% of a polylactic acid resin;
(B) 1 to 50 parts by weight of a flame retardant;
(C) 1 to 30 parts by weight of an acryl-based copolymer; and
(D) 1 to 20 parts by weight of an impact-reinforcing agent.

2. The polylactic acid/polycarbonate resin composition of claim 1, wherein the polylactic acid resin has a weight average molecular weight ranging from 80,000 to 300,000 g/mol.

3. The polylactic acid/polycarbonate resin composition of claim 1 or 2, wherein the flame retardant is selected from the group consisting of a phosphorus flame retardant, a nitrogen compound-based flame retardant, a silicon-based flame retardant, an inorganic flame retardant, and a combination thereof.

4. The polylactic acid/polycarbonate resin composition of claim 1 or 2, wherein the flame retardant is a phosphorus flame retardant.

5. The polylactic acid/polycarbonate resin composition of any one of claims 1 to 4, wherein the acryl-based copolymer has a weight average molecular weight ranging from 500,000 to 10,000,000 g/mol.

6. The polylactic acid/polycarbonate resin composition of any one of claims 1 to 4, wherein the acryl-based copolymer has a weight average molecular weight ranging from 1,000,000 to 10,000,000 g/mol.

7. The polylactic acid/polycarbonate resin composition of any one of claims 1 to 6, wherein the acryl-based copolymer is a copolymer comprising at least two monomers selected from the group consisting of a linear alkyl (meth)acrylate monomer, a branched alkyl (meth)acrylate monomer, a cyclic alkyl (meth)acrylate monomer, and a combination thereof; or a copolymer prepared by grafting a reactive group into a monomer selected from the group consisting of a linear alkyl (meth)acrylate monomer, a branched alkyl (meth)acrylate monomer, a cyclic alkyl (meth)acrylate monomer, and a combination thereof.

8. The polylactic acid/polycarbonate resin composition of any one of claims 1 to 7, wherein the impact-reinforcing agent is selected from the group consisting of a core-shell copolymer, a linear olefin-based copolymer, and a combination thereof.

9. The polylactic acid/polycarbonate resin composition of claim 8, wherein the core-shell copolymer is prepared by grafting an unsaturated monomer selected from the group consisting of an acryl-based monomer, an aromatic vinyl monomer, an unsaturated nitrile monomer, and a combination thereof into a rubber polymer polymerized by a monomer selected from the group consisting of a diene-based monomer, an acryl-based monomer, a silicon-based monomer, and a combination thereof.

10. The polylactic acid/polycarbonate resin composition of any one of claims 1 to 9, wherein the impact-reinforcing agent is a linear olefin-based copolymer.

11. A molded product obtainable from the polylactic acid/polycarbonate resin composition according to any one of claims 1 to 10.

12. Process for preparing the polylactic acid/polycarbonate resin composition of any one of claims 1 to 10 wherein the components are melt-blended.

13. Use of a polylactic acid/polycarbonate resin composition according to any one of claims 1 to 10 for preparing automobile parts, electronic parts, communication devices, office machines, and housing appliances.
